# EUROPEAN PATENT SPECIFICATION

(11) **EP 0 685 543 B1**
(45) Date of publication and mention of the grant of the patent: **04.08.1999**
(21) Application number: 95201298.7
(22) Date of filing: 18.05.1995
(51) Int. Cl.: C09D 167/08, C09D 7/00

(54) **Resin composition containing an alkyd resin and a reactive diluent**
Harzzusammensetzung auf Basis von Alkydharz und Reaktivverdünner
Composition de résine contenant une résine alkyde et un diluent réactif

(30) Priority: 24.05.1994 NL 9400840
(43) Date of publication of application: 06.12.1995
(73) Proprietor: DSM N.V., 6411 TE Heerlen (NL)
(72) Inventor: Zonjee, Theodorus, NL-7721 CG Dalfsen (NL)

(56) References cited:
- EP-A- 0 264 609
- US-A- 4 689 266

## Description

The invention relates to a high solid resin composition comprising an alkyd resin and a reactive diluent.

As described by, for instance, Larson and Emmons in "The Chemistry of High Solids Alkyd/Reactive Diluents Coatings" (pp 1-21, Organic Coatings, Science and Technology, Volume 6, 1984, Marcel Dekker Inc), efforts have been undertaken to find resin compositions which are used as a binder in coatings and which result in virtually solventless paint compositions. Given the environmental problems posed by the use of organic solvents, such coatings may contain only a low percentage of volatile solvents or even none at all. One way of overcoming these problems is to use reactive diluents in the resin compositions. Such diluents are in general low-viscosity compounds having a high boiling point, or low saturated vapour pressure. The diluents serve as a solvent during application but may subsequently also copolymerize. The requirements for these diluents are that, on the one hand, they can be applied as a cross-linking agent, and, on the other hand, they contribute to the good properties which a coating must possess.

Some disadvantages of the known reactive diluents, the resin compositions that are based on polymers and these diluents, and the resultant coatings made using these diluents are: (1) that the monomers used as reactive diluents are too volatile; (2) that the properties of the resultant coatings are inadequate; (3) that the monomers to be used as reactive diluent are difficult to prepare and are very expensive; (4) that the monomers exhibit insufficient solubility and insufficient miscibility with the polymers; or (5) the diluting effect of the reactive diluents is less than optimum.

A coating should have a high molecular weight if it is to exhibit adequate protective properties in a cured paint. On the other hand, the molecular weight of the paint should be low if the paint is to meet the viscosity requirements for the aforementioned coating systems.

The object of the invention is to provide virtually solventless resin compositions (i.e. containing more than 95% solids at a viscosity appropriate for use) which meet given viscosity requirements and result in good hard-drying properties.

The invention is characterized in that the reactive diluent is an alkyl ester derived from the acid of an unsaturated vegetable oil.

The resin composition of the invention results in excellent drying, in a solids content of up to 100%, a good hardness, in the absence of wrinkling and in an excellent thinning down behaviour.

Various vegetable oils and the properties of such oils are described in Surface Coatings, Vol. 1, Raw Materials and Their Usage, pp. 20-38 (second edition 1983, Chapman and Hall).

Suitable unsaturated vegetable oils include, for instance, tung oil (wood oil), linseed oil, vernonia oil, herring oil, sardine oil, safflower oil, calendula oil, soya bean oil, tall oil and castor oil. Their conjugated derivatives are also suitable.

Preferably the iodine number of the oil (according to the Wijs method) is greater than 130. The determination of the iodine value according to the Wijs method is described on page 34 of said publication in Surface Coatings.

The preferred oil is tung oil or calendula oil.

The alkyl ester preferably is a (C₁-C₆)alkyl ester and more preferably is a (C₁-C₄)alkyl ester.

A preferred reactive diluent is the methylester derivative of wood oil or calendula oil.

The resin composition of the invention can be prepared by mixing the reactive diluent with the polymer in a manner known in the art.

The reactive diluent according to the present invention usually is applied in amounts of between 5 and 50 wt.% relative to the alkyd resin. Preferably, an amount of between 10 and 40 wt.% is chosen.

The esters according to the invention can, for example, be prepared by transesterification of the oil with an alcohol.

The reactive diluent of the invention may be applied in combination with known reactive diluents such as, for example, fumarates, maleates, allylesters, allylethers, DCPD-derivatives or dicyclopentenylacrylates.

Depending on the desired characteristics it is also possible to use mixtures of the alkyl esters according to the present invention.

The invention also relates to the application of the reactive diluent of the invention in combination with other resins, for example, epoxy esters.

The reactive diluent of the invention preferably is combined with an alkyd resin. Alkyd resins are in general prepared by esterification of polyols, polybasic acids or their anhydrides and fatty acids. Most alkyd resins are viscous, and are supplied in solution for ease of handling. The properties are primarily determined by the nature and the ratios of the alcohols and acids used and by the degree of condensation. Certain modifications to the composition, for example styrene alkyds and silicone alkyds, yield products having special properties.

Alkyd resins obtained by esterification of a dibasic acid, mainly phthalic acid, and a trivalent alcohol, usually glycerol, are thermosetting brittle resins which at a low degree of condensation are soluble in alcohol. Those resins obtained by esterification of a dihydric alcohol, such as glycol, and a dibasic acid, such as phthalic acid, with or without addition of a non-hardening fatty acid, are thermoplastic resins that are soluble in hydrocarbons and are commonly used as plasticizers.

Suitable alkyd resins may be classified as fatty alkyds with a fatty acid content higher than 60%, semi-fatty alkyds with a fatty acid content of between 45 and 60% and lean alkyds with a fatty acid content below 45%. The consistency ranges from syrupy for the fatty alkyd resins to brittle for the lean alkyd resins. Since their favorable properties include quick drying and hard drying, alkyd resins are widely used as binders in the paint industry. The wide variety of types makes it possible to select a type that suits the intended service (tailor-made types). The lean, quick-drying types are used in, for instance, industrial spray paints. The more fatty, somewhat less quick-drying types are highly suited for brush application and for house paints. In this way, each of the many types has its own area of application. It may be advantageous to prepare alkyds in the presence of 3-20 wt.% monoalcohols having from 5 to 13 carbon atoms, such as hexanol, nonanol and decanol. This improves, among other things, the solubility in alkanes. Alkanes are less harmful to the environment when used as a solvent than are aromatic group-containing solvents.

Alkyd resins are used in combination with, for instance, carbamide resins and melamine resins for stoving enamels and in combination with nitrocellulose for nitrosynthetic lacquers. Modified alkyd resins can be prepared by heating a dibasic acid (or anhydride) with a polyhydric alcohol and a fatty acid. In the fatty acid method, dicarboxylic acid(anhydride), polyol and fatty acid are heated to about 250°C until the correct acid number and the correct viscosity are obtained. In the monoglyceride method, the fatty acids obtained on esterification of a suitable oil are modified with glycerol to form monoglyceride. Subsequently, dicarboxylic acid(anhydride) is added and the mixture is treated in the same way as in the fatty acid method. In the solvent method, the reaction is effected in the presence of a solvent that is immiscible with water. The polyalcohols most often used are glycerol, pentaerythritol, trimethylolpropane and sorbitol. Highly suitable polycarboxylic acids are, for instance, phthalic acid(anhydride) and maleic acid. Fatty acids often used are derived from linseed oil, castor oil, soya bean oil and coconut oil. Suitable modifiers are, for instance, phenol resins, styrene and silicones. In place of the polymer, use may be made of, for instance, linseed oil, soya bean oil, sunflower oil, safflower oil, tall oil or conjugated soya bean oil as a drying oil.

Alkyd resins are discussed in greater detail in Surface Coatings, Raw Material and Their Usage, Vol. 1, by Oil and Colour Chem. Ass. Australia (1983) on pp. 53-77.

The resin composition of the invention may contain customary additives such as siccatives, pigments and stabilizers.

The resin composition of the invention may be applied per se as a binder for paint. It is also possible to apply the resin composition in combination with nonreactive solvents. Suitable solvents are, for instance, aromatic or aliphatic hydrocarbons having 6-25 carbon atoms. The amount of solvent preferably is less than 40 wt.%, more particularly less than 20 wt.% (relative to the polymer and the diluent). In practice, the amount of solvent will often be dictated by economic considerations.

The resin composition according to the invention may be applied in alkyd dispersions.

The resin composition of the invention can be used in a paint composition.

The reactive diluent according to the present invention can be applied in the preparation of polymer emulsions, for example, an alkyd-, acrylate- or epoxy emulsion.

Resin compositions according to the invention exhibit negligible emissions of solvents if the diluent of the invention is applied as the sole solvent. As well as having this advantage, they result in desired good coating properties such as curing, resistance to solvents, wet abrasion resistance, chemical resistance, flexibility, gloss and scratch resistance.

The invention is illustrated by the following examples without being limited thereto.

### Experiment A

### Preparation of alkyd resin

A mixture consisting of 3700 parts by weight of tall oil and 135 parts by weight of maleic anhydride was heated to 230°C. At this temperature, 714 parts by weight of pentaerythritol and 258 parts by weight of isophthalic acid were added, whereupon the mixture was further heated to 240°C. The esterified product had an acid number of 10 mg of KOH/gram of resin and a viscosity at 23°C (Physica Viscosimeter) of 3.4 Pas.

### Example I

### Preparation of resin composition

The alkyd resin obtained in Experiment A was mixed with the methyl ester of wood oil fatty acid in various weight ratios at 60°C. The weight ratios of alkyd resin and reactive diluent are indicated in Table 1 as A/R.

The viscosity of the resin composition was determined with an LC 3 Physica Viscosimeter.

**TABLE 1**

| A/R | 100/0 | 90/10 | 80/20 | 70/30 | 60/40 |
|---|---|---|---|---|---|
| viscosity (Pas, 23°C) | 3.4 | 1.7 | 0.9 | 0.5 | 0.3 |

Drying performance was determined with a Bk drying recorder using 100-µm films applied to glass and based on
50 g of resin as obtained in Example I,
5 g of Exxol D40™ (hydrogenated white spirit)
2.75 g of siccative (Siccatol 938™)
0.8 g of methylethyl ketoxime.

**TABLE 2**

| BK results | 100/0 | 90/10 | 80/20 | 70/30 | 60/40 |
|---|---|---|---|---|---|
| Phase 1 | 2.5 | 2.5 | 2 | 1.5 | 1-1.5 |
| Phase 2 | 7-10 | 6-8 | 5-6 | 4 | 4 |
| Phase 3 | >24 | 22 | 12 | 8 | 8 |
| Phase 4 | >24 | >24 | 18 | 16 | >24 |

It is remarkable that low viscosity was combined with good drying performance.
The Koenig hardness (DIN 53157) was as follows.

**TABLE 3**

| | | | | | |
|---|---|---|---|---|---|
| Koenig 1 day | 13 | 15 | 29 | 39 | 42 |
| 2 days | 14 | 27 | 32 | 39 | 42 |
| 5 days | 17 | 20 | 25 | 24 | 38 |

No wrinkling at relatively thick paint layer was observed when less than 30 wt.% methyl ester of wood oil fatty acid was used.

While the present invention has been illustrated by means of certain exemplary embodiments, one of ordinary skill in the art will recognize that modifications, substitutions and improvements may be made without departing from the spirit and scope of the present invention. The scope of the present invention is defined by the appended claims.

## Claims

1. A resin composition comprising an alkyd resin and a reactive diluent comprising an alkyl ester of a fatty acid of an unsaturated vegetable oil.

2. A composition according to claim 1, wherein the iodine value of said oil is greater than 130.

3. A resin composition according to any one of claims 1-2, wherein said alkylester is a (C₁-C₆) alkyl ester.

4. A resin composition according to any one of claims 1-3, wherein the alkylester is a (C₁-C₄) alkyl ester.

5. A resin composition according to any one of claims 1-4, wherein the vegetable oil comprises tung oil or calendula oil.

6. A resin composition according to any one of claims 1-5, wherein the reactive diluent is the methyl ester of a tung oil fatty acid.

7. A method of diluting a resin composition, comprising adding a reactive diluent comprising an alkyl ester of a fatty acid of an unsaturated vegetable oil according to any one of claims 1-6.

8. A paint composition comprising a resin composition according to any one of claims 1-6.

9. Use of an alkyl ester of a fatty acid of an unsaturated vegetable oil as described in any one of claims 1-5 as a reactive diluent in the preparation of polymer emulsions.

## Patentansprüche

1. Harzzusammensetzung, umfassend ein Alkydharz und einen Reaktivverdünner, umfassend einen Alkylester einer Fettsäure eines ungesättigten Pflanzenöls.

2. Zusammensetzung gemäß Anspruch 1, worin der Iodwert des Öls größer ist als 130.

3. Harzzusammensetzung gemäß einem der Ansprüche 1-2, worin der Alkylester ein (C₁-C₆)-Alkylester ist.

4. Harzzusammensetzung gemäß einem der Ansprüche 1-3, worin der Alkylester ein (C₁-C₄)-Alkylester ist.

5. Harzzusammensetzung gemäß einem der Ansprüche 1-4, worin das Pflanzenöl Tungöl oder Calendulaöl umfasst.

6. Harzzusammensetzung gemäß einem der Ansprüche 1-5, worin der Reaktivverdünner der Methylester einer Tungölfettsäure ist.

7. Verfahren zur Verdünnung einer Harzzusammensetzung, umfassend das Zusetzen eines Reaktivverdünners, umfassend einen Alkylester einer Fettsäure eines ungesättigten Pflanzenöls gemäß einem der Ansprüche 1-6.

8. Lackzusammensetzung, umfassend eine Harzzusammensetzung gemäß einem der Ansprüche 1-6.

9. Verwendung eines Alkylesters einer Fettsäure eines ungesättigten Pflanzenöls, wie in einem der Ansprüche 1-5 beschrieben, als Reaktivverdünner bei der Herstellung von Polymer-emulsionen.

## Revendications

1. Composition de résine comprenant une résine alkyde et un diluant réactif comprenant un ester alkylique d'un acide gras d'une huile végétale insaturée.

2. Composition selon la revendication 1, dans laquelle l'indice d'iode de ladite huile est supérieure à 130.

3. Composition de résine selon l'une quelconque des revendications 1 à 2, dans laquelle ledit ester alkylique est un ester alkylique en C₁-C₆.

4. Composition de résine selon l'une quelconque des revendications 1 à 3, dans laquelle l'ester alkylique est un ester alkylique en C₁-C₄.

5. Composition de résine selon l'une quelconque des revendications 1 à 4, dans laquelle l'huile végétale comprend de l'huile de bois ou de l'huile de calendula.

6. Composition de résine selon l'une quelconque des revendications 1 à 5, dans laquelle le diluant réactif est l'ester méthylique d'un acide gras d'huile de bois.

7. Méthode de dilution d'une composition de résine, comprenant l'addition d'un diluant réactif comprenant un ester alkylique d'un acide gras d'une huile végétale insaturée selon l'une quelconque des revendications 1 à 6.

8. Composition de peinture comprenant une composition de résine selon l'une quelconque des revendications 1 à 6.

9. Utilisation d'un ester alkylique d'un acide gras d'une huile végétale insaturée tel que décrit dans l'une quelconque des revendications 1 à 5 comme diluant réactif dans la préparation d'émulsions de polymère.
